# EUROPÄISCHE PATENTSCHRIFT

(11) **EP 1 644 222 B1**
(45) Veröffentlichungstag und Bekanntmachung des Hinweises auf die Patenterteilung: **17.01.2007**
(21) Anmeldenummer: 04726994.9
(22) Anmeldetag: 13.04.2004
(51) Int. Cl.: B60R 13/08

(54) **AKUSTISCH WIRKSAME RADHAUSAUSKLEIDUNG FÜR FAHRZEUGE**
ACOUSTICALLY EFFECTIVE WHEEL HOUSE COVERING FOR VEHICLES
REVETEMENT DE PASSAGE DE ROUE A EFFET ACOUSTIQUE, POUR VEHICULES

(30) Priorität: 15.07.2003 DE 10332172
(43) Veröffentlichungstag der Anmeldung: 12.04.2006
(73) Patentinhaber: Carcoustics Tech Center GmbH, 51381 Leverkusen (DE)
(72) Erfinder: CZERNY, Hans, Rudolf, 53913 Swistal (DE); GNÄDIG, Christian, 53894 Mechernich (DE); VOLLMERT, Herbert, 41334 Nettetal (DE); KALLENBERG, Albert, 50354 Hürth (DE)
(74) Vertreter: Cohausz & Florack
(86) Internationale Anmeldenummer: PCT/EP2004/003876
(87) Internationale Veröffentlichungsnummer: WO 2005/007458

(56) Entgegenhaltungen:
- EP-A- 0 222 193
- EP-A- 0 810 145

## Beschreibung

Die Erfindung betrifft eine akustisch wirksame Radhausauskleidung für Fahrzeuge, nämlich eine Radhausauskleidung zum Mindern der Übertragung von Spritzwassergeräuschen in den Fahrzeuginnenraum und zur Absorption von durch das Abrollen eines Reifens auf einer Fahrbahn hervorgerufenen Rollgeräuschen, die mehrere Materiallagen aufweist und in einem Radhaus des Fahrzeugs befestigbar ist.

Derartige Radhausauskleidungen sind bekannt. So ist beispielsweise in der EP 0 222 193 B1 eine Radhausauskleidung für Kraftfahrzeuge beschrieben, die aus einer der Kontur des Radhauses angepassten und an dieser befestigten Schale aus Kunststoffmaterial besteht, wobei das die Schale bildende Kunststoffmaterial ein genadeltes Kunststofffaser-Vliesmaterial ist, das aus Bahnmaterial durch Warmverformung der Kontur des Radhauses angepasst und durch Kleben, Klemmen, Schrauben oder dergleichen im Radhaus befestigt ist. Bei einer Ausführungsform dieser bekannten Radhausauskleidung ist das Kunststofffaser-Vliesmaterial an seiner Rückseite durch eine Kunststoffbeschichtung wasserundurchlässig gemacht und vollflächig im Radhaus befestigt. Bei einer anderen Ausführungsform ist das Kunststofffaser-Vliesmaterial sowohl an seiner Rückseite als auch an seiner Vorderseite durch eine Kunststoffbeschichtung wasserundurchlässig gemacht. Die Kunststoffbeschichtung ist jedoch insofern nachteilig, als sie die Schallschluckwirkung (Dissipationswirkung) der Radhausauskleidung vermindert.

Aus der DE 198 17 567 C2 ist eine Radlaufschale für Fahrzeuge bekannt, die erste und zweite Flächenbereiche aufweist, wobei die ersten Flächenbereiche ein tragendes Skelett bilden und aus einem akustisch wirksamen thermoplastischen Kunststoffmaterial bestehen, während die zweiten Flächenbereiche aus einem textilen Kunststoffmaterial mit teppichflorartiger Oberfläche gebildet sind. Die beiden Flächenbereiche sind randseitig fest miteinander verbunden und erstrecken sich jeweils ohne wesentliche Überdeckung über die gesamte Dicke der Radlaufschale. Die zweiten Flächenbereiche weisen zumindest teilweise an ihrer dem Radhaus zugewandten Seite eine wasserdichte Kunststoffbeschichtung auf. Auch diese Kunststoffbeschichtung führt zu einer Verminderung der Schallschluckwirkung.

Des weiteren ist aus der DE 199 30 762 A1 eine schalenförmig ausgebildete Radhausauskleidung für Kraftfahrzeuge bekannt, die aus einem aus Kunststoff hergestellten, leichten Rahmengerüst besteht, welches mindestens auf seiner dem Rad zugekehrten Seite von einer reißfesten und schlagzähen Kunststofffolie abgedeckt ist. Das Rahmengerüst besteht aus zwei Seitenleisten und mehreren, diese auf Abstand zusammenhaltenden Verbindungsleisten, wobei die Seitenleisten und Verbindungsleisten Öffnungen bzw. Hohlräume begrenzen, die durch die erwähnte Kunststofffolie abgedeckt sind. Das Schallabsorptionsvermögen dieser Radhausauskleidung ist jedoch eher unbefriedigend, da die an dem Rahmengerüst befestigte Kunststofffolie wie die Bespannung einer Trommel wirkt und beim Auftreffen von Spritzwasser störende Spritzwassergeräusche hervorruft.

EP 0810 145 A1 offenbart ein Radhausauskledung mit den Merkmalen des oberbegriffs des unabhängigen Anspruchs 1.

Ausgehend von diesem Stand der Technik liegt der vorliegenden Erfindung die Aufgabe zugrunde, eine Radhausauskleidung für Fahrzeuge zu schaffen, die eine verbesserte schallschluckende Wirkung aufweist.

Diese Aufgabe wird bei einer Radhausauskleidung der eingangs genannten Art erfindungsgemäß dadurch gelöst, dass deren Materiallagen aus mindestens drei sandwichartig angeordneten, luftdurchlässigen Materiallagen gebildet sind, mit einer ersten textilen Materiallage, die dem Radhaus zugewandt ist und bei einem Prüfdruck von 1 mbar eine Luftdurchlässigkeit im Bereich von 15 bis 60 l/m²s aufweist, und einer zweiten Materiallage, die zwischen der ersten und einer dritten Materiallage angeordnet ist und bei einem Prüfdruck von 1 mbar eine Luftdurchlässigkeit im Bereich von 100 bis 1500 l/m²s aufweist, wobei die dritte Materiallage eine textile Materiallage ist, die dem Reifen zugewandt ist und bei einem Prüfdruck von 1 mbar eine Luftdurchlässigkeit im Bereich von 20 bis 200 l/m²s aufweist.

Die erfindungsgemäße Radhausauskleidung zeichnet sich durch eine verbesserte schallschluckende Wirkung aus. Sie wirkt sowohl schallabsorbierend als auch schalldämmend. Ihre Materiallagen sind jeweils luftdurchlässig, so dass sie gegenüber herkömmlichen Radhausauskleidungen ein vergleichsweise hohes Schallabsorptionsvermögen besitzt. Die Materiallagen der erfindungsgemäßen Radhausauskleidung sind so gewählt bzw. behandelt, dass sie eine unterschiedliche Luftdurchlässigkeit zueinander aufweisen. Hinsichtlich der akustischen Impedanz liegen an den Übergängen der Materiallagen demzufolge Impedanzsprünge vor, die zu einer verbesserten Schalldämpfung sowie Schalldämmung führen.

Die angegebenen Werte für die Luftdurchlässigkeit der Materiallagen der erfindungsgemäßen Radhausauskleidung sind nach DIN 53887 bestimmt. Diese Norm definiert ein Prüfverfahren zur Beurteilung der Luftdurchlässigkeit von textilen Flächengebilden. Bei diesem Prüfverfahren wird eine Probe des zu messenden textilen Flächengebildes in einen Probenring eingespannt und ein bestimmter Prüfdruck angelegt, so dass Luft senkrecht zur Oberfläche der Messprobe durch diese hindurchströmt. Die Prüffläche beträgt 20 cm². Der Widerstand der Messprobe bewirkt einen Druckverlust, so dass ein Druckunterschied entsteht. Der durch die Messprobe hindurchströmende Volumenstrom wird in Bezug auf die Prüffläche ermittelt. Die ermittelten Messwerte werden in l/m²s angegeben.

Eine bevorzugte Ausgestaltung der erfindungsgemäßen Radhausauskleidung besteht darin, dass zumindest die zweite Materiallage einen nachgiebigen, elastischen Aufbau aufweist. Der elastische Aufbau verringert erheblich die Geräusche, die durch den Aufprall von Spritzwasser, Steinen oder dergleichen auf der Radhausauskleidung erzeugt werden.

Nach einer weiteren vorteilhaften Ausgestaltung der erfindungsgemäßen Radhausauskleidung ist vorgesehen, dass deren zweite Materiallage aus durch Bindemittel verbundenen Naturfasern, insbesondere Kokosfasern gebildet ist. Kokosfasern stellen einen kostengünstigen, nachwachsenden Rohstoff dar. Sie besitzen eine hohe Strapazierfähigkeit sowie eine sehr gute Beständigkeit in feuchter Umgebung, insbesondere bei Beaufschlagung durch Spritzwasser. Die Kokosfasern sind vorzugsweise mit Latex zu einer luftdurchlässigen Matte bzw. einem luftdurchlässigen Formteil geformt, beispielsweise mittels einer Formpresse. Derartige Kokosfasermatten bzw. Kokosfaserformteile weisen eine beachtliche Elastizität sowie eine hohe Festigkeit, insbesondere eine hohe Schlagzähigkeit auf. Vorteilhaft ist ferner, dass es in Matten bzw. Formteilen aus Kokosfasern in der Regel zu keiner Pilzbildung kommt, wie es bei anderen Naturfasern unter Einwirkung von Feuchtigkeit mitunter der Fall ist.

Eine andere vorteilhafte Ausgestaltung der erfindungsgemäßen Radhausauskleidung ergibt sich, wenn deren zweite Materiallage aus durch ein Bindemittel verbundenem Korkschrot gebildet ist. Als Bindemittel können hier insbesondere Leime und Tränkharze zum Einsatz kommen. Kork ist relativ leicht. Die Radhausauskleidung kann somit entsprechend leicht ausgeführt werden. Zudem besitzt Kork eine relative hohe Elastizität und eine hervorragende Isolierwirkung. Der hier verwendete Korkschrot besteht aus Korkteilchen, die eine mittlere Korngröße im Bereich von vorzugsweise 1 bis 5 mm aufweisen. Korkschrot mit einer solchen Korngröße verleiht der zweiten Materiallage eine hohe Porosität und ein entsprechend hohes Schallschluckvermögen.

Eine weitere vorteilhafte Ausgestaltung der erfindungsgemäßen Radhausauskleidung ergibt sich, wenn deren zweite Materiallage aus einem bauschigen Volumenvlies mit einer Schichtdicke im Bereich von 3 bis 15 mm, vorzugsweise etwa 4 bis 10 mm gebildet ist. Das Volumenvlies verhält sich ebenfalls nachgiebig und elastisch. Darüber hinaus besitzt es ein gutes Schallschluckvermögen, wobei es besonders leicht ist.

Ferner ist es vorteilhaft, wenn zumindest die dem Reifen zugewandte Materiallage der Radhausauskleidung hydrophob ausgebildet ist. Auf diese Weise kann die Wasseraufnahme der Radhausauskleidung minimiert werden.

Weitere bevorzugte und vorteilhafte Ausgestaltungen der Erfindung sind in den Unteransprüchen angegeben.

Nachfolgend wird die Erfindung anhand einer mehrere Ausführungsbeispiele darstellenden Zeichnung näher erläutert. Es zeigen schematisch:
- Fig. 1: eine perspektivische Darstellung einer erfindungsgemäßen Radhausauskleidung;
- Fig. 2: eine Schnittansicht durch einen Abschnitt einer erfindungsgemäßen Radhausauskleidung gemäß einem ersten Ausführungsbeispiel;
- Fig. 3: eine Schnittansicht durch einen Abschnitt einer erfindungsgemäßen Radhausauskleidung gemäß einem zweiten Ausführungsbeispiel; und
- Fig. 4: eine Schnittansicht durch einen Abschnitt einer erfindungsgemäßen Radhausauskleidung gemäß einem dritten Ausführungsbeispiel.

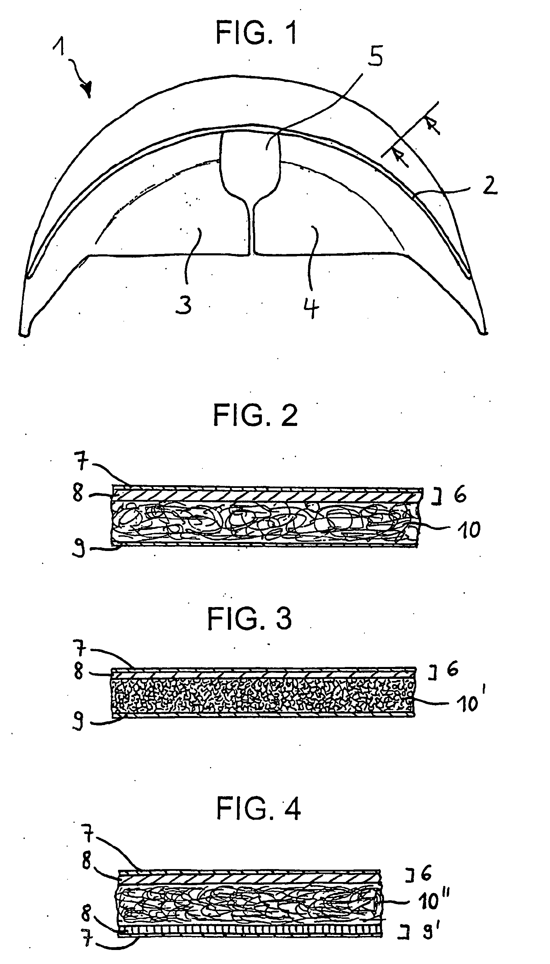

Fig. 1 zeigt eine schalenförmige Radhausauskleidung 1 für ein vorderes Radhaus einer Kraftfahrzeugkarosserie. Die Radhausauskleidung 1 ist der Kontur eines aus Blech bestehenden Radhauses weitgehend angepasst und kann durch Befestigungsmittel wie Schrauben, Clipse oder dergleichen im Radhaus befestigt werden. Zudem sind an der Radhausauskleidung 1 für deren Befestigung Klemmränder 2 ausgebildet. An ihrer dem Motor des Kraftfahrzeugs zugewandten Seite weist die Radhausauskleidung 1 zwei Seitenabdeckungen 3, 4 auf, die vorzugsweise einstückig an der Radhausauskleidung 1 angeformt sind. Zwischen den Seitenabdeckungen 3, 4 ist eine Ausnehmung 5 für ein Lenkgestänge des Kraftfahrzeugs ausgebildet.

Die in Fig. 1 dargestellte Radhausauskleidung 1 ist mehrschichtig ausgebildet. Sie ist aus mindestens drei luftdurchlässigen, sandwichartig angeordneten Materiallagen aufgebaut, die jeweils eine definierte Luftdurchlässigkeit bzw. einen definierten Strömungswiderstand besitzen. Die Materiallagen sind so gewählt und/oder behandelt bzw. ausgerüstet, dass sie zueinander unterschiedliche Luftdurchlässigkeiten und damit unterschiedliche Strömungswiderstände aufweisen. Die dem Radhaus zugewandte Materiallage ist eine textile Materiallage, die gemäß DIN 53887 bei einem Prüfdruck von 1 mbar eine Luftdurchlässigkeit im Bereich von 15 bis 60 l/m²s aufweist. Die dem Reifen zugewandte Materiallage besteht ebenfalls aus einer textilen Materiallage. Sie weist bei einem Prüfdruck von 1 mbar eine Luftdurchlässigkeit im Bereich von 20 bis 200 l/m²s auf. Zwischen den beiden Materiallagen ist eine Materiallage mit einer Luftdurchlässigkeit im Bereich von 100 bis 1500 l/m²s angeordnet.

Nach einer bevorzugten Ausgestaltung ist vorgesehen, dass die dem Radhaus zugewandte Materiallage 6 eine geringere Luftdurchlässigkeit aufweist als die zweite Materiallage 10, und dass die zweite Materiallage 10 wiederum eine geringere Luftdurchlässigkeit als die dritte Materiallage 9 aufweist.

Die Seitenabdeckungen 3, 4 sind ebenfalls aus mehreren Materiallagen gebildet, wobei die dem Motor zugewandte Materiallage eine höhere Luftdurchlässigkeit aufweist als eine hierzu benachbart angeordnete Materiallage. Die Seitenabdeckungen 3, 4 können insbesondere aus mehr als zwei Materiallagen gebildet sein, wobei die Luftdurchlässigkeit bzw. der Strömungswiderstand der Materiallagen von der dem Motor zugewandten Materiallage in Richtung der dem Reifen zugewandten Materiallage zunimmt.

In Fig. 2 ist ein erstes Ausführungsbeispiel des Schichtenaufbaus der erfindungsgemäßen Radhausauskleidung 1 gezeigt. Die dem Radhaus zugewandte Materiallage 6 ist luftdurchlässig und aus einem Nadelvliesstoff 7 und einer biegesteifen Trägerschicht 8 gebildet. Bei dem Nadelvliesstoff 7, der dem Radhaus zugewandt ist, kann es sich vorzugsweise um einen aus Polyethylenterephthalat-Fasern (PET) hergestellten Vliesstoff handeln. Die Trägerschicht 8 ist aus einer Mischung aus Polyethylenterephthalat-Fasern (PET) und Polypropylen-Fasern (PP) gebildet. Das Mischungsverhältnis beträgt etwa 65 bis 70 Gew.-% PET zu 30 bis 35 Gew.-% PP. Die Materiallage 6 weist ein Flächengewicht von etwa 0,9 bis 1,4 kg/m² und eine Schichtdicke von etwa 2 bis 3 mm auf.

Die dem Reifen bzw. der Fahrbahn zugewandte Materiallage 9 ist ebenfalls luftdurchlässig. Sie besteht aus einem relativ dünnen, aus Polyester-Fasern hergestellten Abdecknadelvlies. Das Abdecknadelvlies weist ein Flächengewicht von ca. 70 bis 150 g/m² auf. Die Materiallage 9 ist vorzugsweise durch ein geeignetes Imprägnierungsmittel hydrophob ausgebildet.

Die zwischen den Materiallagen 6 und 9 angeordnete Materiallage 10 ist in diesem Ausführungsbeispiel durch eine Einlage aus mit Latex gebundenen Kokosfasern gebildet. Die einzelnen Kokosfasern sind weitestgehend von Latex umhüllt. Die Kokosfasern sind dabei so stark verdichtet, dass die daraus gebildete luftdurchlässige Materiallage 10 eine Luftdurchlässigkeit im Bereich von ca. 100 bis 300 l/m²s besitzt (bezogen auf einen Prüfdruck von 1 mbar). Es ist zu erkennen, dass die Materiallage 10 eine deutlich größere Schichtdicke als die beiden anderen Materiallagen 6 und 9 aufweist. Die Schichtdicke der Materiallage 10 ist mindestens doppelt so dick wie die dem Radhaus zugewandte Materiallage 6. Das Flächengewicht der Materiallage 10 liegt im Bereich von 1.000 bis 2.000 g/m², vorzugsweise im Bereich von 1.200 bis 1.800 g/m². Die Materiallage 6 besitzt einen erheblich größeren Strömungswiderstand als die mittlere Materiallage 10 aus Kokosfasern und Latex.

In Fig. 3 ist ein zweites Ausführungsbeispiel des Schichtenaufbaus der erfindungsgemäßen Radhausauskleidung 1 gezeigt. Der Schichtenaufbau unterscheidet sich von dem Schichtenaufbau gemäß Fig. 2 lediglich dadurch, dass die mittlere Materiallage 10' aus durch ein Bindemittel verbundenem Korkschrot gebildet ist. Die den Korkschrot bildenden Korkteilchen haben eine mittlere Korngröße im Bereich von etwa 1 bis 5 mm. Die mittlere Materiallage 10' besitzt somit eine hohe Porosität. Der Korkschrot kann an einer textilen Trägerlage, vorzugsweise einem durchsichtigen bzw. luftdurchlässigen Gewebe aus Natur- oder Kunstfasern fixiert sein. Als Bindemittel zur Fixierung der Korkteilchen untereinander und an der textilen Trägerlage kommen Leime bzw. Tränkharze zum Einsatz, wie etwa URECOLL^{®} oder Aronal^{®} der BASF AG. Auch hier besitzt die Materiallage 6 einen erheblich größeren Strömungswiderstand als die mittlere Materiallage 10' aus Korkschrott und Bindemittel.

Der in den Figuren 2 und 3 gezeigten Schichtenaufbauten erstrecken sich jeweils insbesondere auf die Seitenabdeckungen 3, 4 der Radhausauskleidung 1 gemäß Fig. 1. Die Materiallagen 6, 9 und 10 bzw. 6, 9 und 10' erstrecken sich vorzugsweise parallel zueinander über den gesamten Umfang der jeweiligen Radhausauskleidung 1. Es ist jedoch auch eine selektive Anordnung der Materiallagen 6, 9 und 10 bzw. 6, 9 und 10' möglich, derart, dass der sandwichartige Schichtenaufbau aus diesen Materiallagen beispielsweise auf Bereiche der Radhausauskleidung begrenzt ist, die in besonderem Maße dem Aufprall von Spritzwasser und/oder Steinschlag ausgesetzt sind.

In Fig. 4 ist ein drittes Ausführungsbeispiel des Schichtenaufbaus der erfindungsgemäßen Radhausauskleidung gezeigt. Die dem Radhaus zugewandte Materiallage 6 entspricht der luftdurchlässigen Materiallage 6 aus Nadelvliesstoff und Trägerschicht gemäß Fig. 2. Auch die Materiallage 9' entspricht in diesem Ausführungsbeispiel der Materiallage 6 gemäß Fig. 2, wobei jedoch der Nadelvliesstoff 7 dem Reifen bzw. der Fahrbahn zugewandt ist. Zumindest der Nadelvliesstoff 7 ist durch ein Imprägnierungsmittel hydrophob und vorzugsweise zusätzlich oleophob ausgebildet.

Zwischen den Materiallagen 6, 9' bzw. deren biegesteifen Trägerschichten 8 ist eine Einlage aus einem bauschigen Volumenvlies 10" angeordnet. Das Volumenvlies besteht beispielsweise aus PET-Fasern und weist eine Schichtdicke von etwa 3 bis 10 mm, vorzugsweise 4 bis 6 mm auf. Das Volumenvlies 10" verleiht dem sandwichartigen Schichtenaufbau elastische Eigenschaften. Die Materiallagen 6 und 9' besitzen jeweils einen erheblich größeren Strömungswiderstand und dementsprechend eine erheblich geringere Luftdurchlässigkeit als die mittlere Materiallage 10" aus Volumenvlies. Der in Fig. 4 gezeigte Schichtenaufbau hat eine Gesamtschichtstärke von etwa 7 bis 10 mm und ist vorzugsweise für Radhausauskleidungen bestimmt, die in den hinteren Radhäusern einer Kraftfahrzeugkarosserie montiert werden.

Die Erfindung ist in ihrer Ausführung nicht auf die vorstehend beschriebenen Ausführungsbeispiele beschränkt. Vielmehr sind mehrere Varianten möglich, die auch bei grundsätzlich abweichender Gestaltung von dem in den Ansprüchen definierten Erfindungsgedanken Gebrauch machen. So kann beispielsweise in dem Schichtenaufbau gemäß Fig. 4 das die mittlere Materiallage 10" bildende Volumenvlies durch die Materiallage 10 aus Kokosfasern und Latex gemäß Fig. 2 oder durch die Materiallage 10' aus Korkschrot und Bindemittel gemäß Fig. 3 ersetzt werden. Es liegt auch im Rahmen der Erfindung, die Anordnung der luftdurchlässigen Materiallagen 6, 9, 10; 6, 9, 10' bzw. 6, 9', 10" auf den Bereich der Seitenabdeckungen 3, 4 zu begrenzen. Der restliche Teil der Radhausauskleidung dient dann in erster Linie als Steinschlag- und Korrosionsschutz und ist in diesem Fall im wesentlichen aus kompaktem Kunststoff gefertigt.

## Patentansprüche

1. Radhausauskleidung (1) für Fahrzeuge zum Mindern der Übertragung von Spritzwassergeräuschen in den Fahrzeuginnenraum und zur Absorption von durch das Abrollen eines Reifens auf einer Fahrbahn hervorgerufenen Rollgeräuschen, die aus mehreren Materiallagen (6, 10, 10', 10", 9) gebildet ist,
**dadurch gekennzeichnet, dass**
die Materiallagen mindestens drei sandwichartig angeordnete, luftdurchlässige Materiallagen (6, 10, 10', 10", 9) umfassen, mit einer ersten textilen Materiallage (6), die dem Radhaus zugewandt ist und bei einem Prüfdruck von 1 mbar eine Luftdurchlässigkeit im Bereich von 15 bis 60 1/m²s aufweist, und einer zweiten Materiallage (10, 10', 10"), die zwischen der ersten (6) und einer dritten Materiallage (9, 9') angeordnet ist und bei einem Prüfdruck von 1 mbar eine Luftdurchlässigkeit im Bereich von 100 bis 1500 l/m²s aufweist, wobei die dritte Materiallage (9, 9') eine textile Materiallage ist, die dem Reifen zugewandt ist und bei einem Prüfdruck von 1 mbar eine Luftdurchlässigkeit im Bereich von 20 bis 200 l/m²s aufweist.

2. Radhausauskleidung nach Anspruch 1,
**dadurch gekennzeichnet, dass**
die zweite Materiallage (10, 10', 10") eine größere Schichtdicke als die erste Materiallage (6) und/oder die dritte Materiallage (9, 9') aufweist.

3. Radhausauskleidung nach Anspruch 1 oder 2,
**dadurch gekennzeichnet, dass**
zumindest die zweite Materiallage (10, 10', 10") einen elastischen Aufbau aufweist.

4. Radhausauskleidung nach einem der Ansprüche 1 bis 3,
**dadurch gekennzeichnet, dass**
die zweite Materiallage (10) aus durch ein Bindemittel verbundenen Naturfasern gebildet ist.

5. Radhausauskleidung nach einem der Ansprüche 1 bis 4,
**dadurch gekennzeichnet, dass**
die zweite Materiällage (10) aus durch Latex verbundenen Kokosfasern gebildet ist.

6. Radhausauskleidung nach einem der Ansprüche 1 bis 5,
**dadurch gekennzeichnet, dass**
die zweite Materiallage (10') aus durch ein Bindemittel verbundenem Korkschrot gebildet ist.

7. Radhausauskleidung nach einem der Ansprüche 1 bis 6,
**dadurch gekennzeichnet, dass**
die zweite Materiallage (10") aus einem bauschigen Volumenvlies mit einer Schichtdicke im Bereich von 4 bis 10 mm gebildet ist.

8. Radhausauskleidung nach einem der Ansprüche 1 bis 7;
**dadurch gekennzeichnet, dass**
die erste Materiallage (6) aus einem Nadelvliesstoff (7) und einer biegesteifen Trägerschicht (8) gebildet ist.

9. Radhausauskleidung nach einem der Ansprüche 1 bis 8,
**dadurch gekennzeichnet, dass**
die dritte Materiallage (9') aus einem Nadelvliesstoff (7) und einer biegesteifen Trägerschicht (8) gebildet ist.

10. Radhausauskleidung nach Anspruch 8 oder 9,
**dadurch gekennzeichnet, dass**
die Trägerschicht (8) aus Polyethylenterephthalat-Fasern und Polypropylen-Fasern gebildet ist.

11. Radhausauskleidung nach einem der Ansprüche 8 bis 10,
**dadurch gekennzeichnet, dass**
der Nadelvliesstoff (7) an der Außenseite der Trägerschicht (8) angeordnet ist.

12. Radhausauskleidung nach einem der Ansprüche 1 bis 11,
**dadurch gekennzeichnet, dass** die erste Materiallage (6) einen größeren Strömungswiderstand aufweist als die zweite Materiallage (10, 10', 10").

13. Radhausauskleidung nach einem der Ansprüche 1 bis 12,
**dadurch gekennzeichnet, dass** die dritte Materiallage (9, 9') einen größeren Strömungswiderstand aufweist als die zweite Materiallage (10, 10', 10").

14. Radhausauskleidung nach einem der Ansprüche 1 bis 13,
**dadurch gekennzeichnet, dass**
mindestens die dritte Materiallage (9, 9') hydrophob und/oder oleophob ausgebildet ist.

15. Radhausauskleidung nach einem der Ansprüche 1 bis 14,
**dadurch gekennzeichnet, dass**
die erste Materiallage (6) eine geringere Luftdurchlässigkeit aufweist als die zweite Materiallage (10, 10', 10"), und dass die zweite Materiallage (10, 10', 10") eine geringere Luftdurchlässigkeit als die dritte Materiallage (9, 9') aufweist.

16. Radhausauskleidung nach einem der Ansprüche 1 bis 14,
**dadurch gekennzeichnet, dass**
die erste Materiallage (6) und die dritte Materiallage (9, 9') jeweils eine geringere Luftdurchlässigkeit aufweisen als die zweite Materiallage (10, 10', 10").

17. Radhausauskleidung nach einem der Ansprüche 1 bis 16,
**dadurch gekennzeichnet, dass**
sie an ihrer dem Motor des Kraftfahrzeugs zugewandten Seite mindestens eine Seitenabdeckung (3, 4) aufweist.

18. Radhausauskleidung nach Anspruch 17,
**dadurch gekennzeichnet, dass**
die Seitenabdeckung (3, 4) einstückig mit der Radhausauskleidung (1) ausgebildet ist.

19. Radhausauskleidung nach Anspruch 17 oder 18,
**dadurch gekennzeichnet, dass** die Seitenabdeckung (3, 4) aus mehreren Materiallagen gebildet ist, wobei eine dem Motor zugewandte Materiallage eine höhere Luftdurchlässigkeit aufweist als eine zu dieser Materiallage benachbart angeordnete Materiallage.

## Claims

1. A wheel house covering (1) for vehicles, which reduces transmission of splash water noises in the passenger compartment of the vehicle and which absorbs noises caused by the rolling of a tyre on a roadway, which wheel house covering is made from several layers of material (6, 10, 10', 10", 9),
**characterised in that**
the material layers comprise at least three air-permeable sandwiched layers of material (6, 10, 10', 10", 9) comprising a first textile material layer (6) facing the wheel housing with the air permeability of the first textile material layer which faces the wheel housing at a test pressure of 1 mbar ranging from 15 to 60 1/m²s, and with the air permeability of a second textile material layer (10, 10', 10") arranged between the first (6) and third (9, 9') material layers at a test pressure of 1 mbar ranging from 100 to 1500 l/m²s, wherein the third material layer (9, 9') is a textile material layer facing the tyre, with the air permeability of said third material layer at a test pressure of 1 mbar ranging from 20 to 200 l/m²s.

2. The wheel house covering according to claim 1,
**characterised in that**
the thickness of the second material layer (10, 10', 10") is larger than that of the first material layer (6) and/or that of the third material layer (9, 9').

3. The wheel house covering according to claim 1 or 2,
**characterised in that**
at least the second material layer (10, 10', 10") comprises an elastic structure.

4. The wheel house covering according to any one of claims 1 to 3,
**characterised in that**
the second material layer (10) is made from natural fibres connected by a binder.

5. The wheel house covering according to any one of claims 1 to 4,
**characterised in that**
the second material layer (10) is made from coconut fibres bound by latex.

6. The wheel house covering according to any one of claims 1 to 5,
**characterised in that**
the second material layer (10') is made from granulated cork connected by a binder.

7. The wheel house covering according to any one of claims 1 to 6,
**characterised in that**
the second material layer (10") is made from a voluminous non-woven fabric of a layer thickness ranging from 4 to 10 mm.

8. The wheel house covering according to any one of claims 1 to 7,
**characterised in that** the first material layer (6) is made from a needle-punched non-woven material (7) and a carrier layer (8) resistant to bending.

9. The wheel house covering according to any one of claims 1 to 8,
**characterised in that**
the third material layer (9') is made from a needle-punched non-woven material (7) and a carrier layer (8) resistant to bending.

10. The wheel house covering according to claim 8 or 9,
**characterised in that**
the carrier layer (8) is made from polyethyleneterephthalate fibres and polypropylene fibres.

11. The wheel house covering according to any one of claims 8 to 10,
**characterised in that** the needle-punched nonwoven material (7) is arranged on the outside of the carrier layer (8).

12. The wheel house covering according to any one of claims 1 to 11,
**characterised in that** the sound impedance of the first material layer (6) is higher than that of the second material layer (10, 10', 10").

13. The wheel house covering according to any one of claims 1 to 12,
**characterised in that**
the sound impedance of the third material layer (9, 9') is higher than that of the second material layer (10, 10', 10").

14. The wheel house covering according to any one of claims 1 to 13,
**characterised in that**
at least the third material layer (9, 9') is made so as to be hydrophobic and/or oleophobic.

15. The wheel house covering according to any one of claims 1 to 14,
**characterised in that**
the air permeability of the first material layer (6) is lower than that of the second material layer (10, 10', 10"), and **in that** the air permeability of the second material layer (10, 10', 10") is lower than that of the third material layer (9, 9').

16. The wheel house covering according to any one of claims 1 to 14,
**characterised in that** in each case the air permeability of the first material layer (6) and the third material layer (9, 9') is lower than that of the second material layer (10, 10', 10").

17. The wheel house covering according to any one of claims 1 to 16,
**characterised in that** at its side facing the engine of the motor vehicle, the wheel house covering comprises at least one side cover (3, 4).

18. The wheel house covering according to claim 17,
**characterised in that**
the side cover (3, 4) is formed in one piece with the wheel house covering (1).

19. The wheel house covering according to claim 17 or 18,
**characterised in that**
the side cover (3, 4) is made from several material layers, wherein the air permeability of the material layer facing the engine is higher than that of a material layer arranged adjacent to said material layer facing the engine.

## Revendications

1. Habillage (1) de passage de roue pour véhicules, destiné à réduire la transmission des bruits des projections d'eau vers l'habitacle du véhicule, et à absorber les bruits de roulement provoqués par le roulement d'un pneu sur une surface de route, l'habillage étant constitué de plusieurs couches de matières (6, 10, 10', 10", 9),
**caractérisé par le fait que** les couches de matières comprennent au moins trois couches de matières (6, 10, 10', 10", 9) disposées en strates de type *sandwich* et perméables à l'air, comprenant une première couche de matière textile (6) tournée vers le passage de roue et présentant, sous une pression d'essai de 1 mbar, une perméabilité à l'air de l'ordre de 15 à 60 1/m²s, et une deuxième couche de matière (10, 10', 10'') disposée entre la première couche (6) et une troisième couche de matière (9, 9') et présentant, sous une pression d'essai de 1 mbar, une perméabilité à l'air de l'ordre de 100 à 1500 l/m²s, la troisième couche de matière (9, 9') étant une couche de matière textile tournée vers le pneu et présentant, sous une pression d'essai de 1 mbar, une perméabilité à l'air de l'ordre de 20 à 200 1/m²s.

2. Habillage de passage de roue selon la revendication 1, **caractérisé en ce que** la deuxième couche de matière (10, 10', 10") présente une épaisseur de couche supérieure à la première couche de matière (6) et/ou à la troisième couche de matière (9, 9').

3. Habillage de passage de roue selon la revendication 1 ou 2, **caractérisé en ce qu'**au moins la deuxième couche de matière (10, 10', 10") présente une construction élastique.

4. Habillage de passage de roue selon l'une des revendications 1 à 3, **caractérisé en ce que** la deuxième couche de matière (10) est constituée de fibres naturelles liées par un liant.

5. Habillage de passage de roue selon l'une des revendications 1 à 4, **caractérisé en ce que** la deuxième couche de matière (10) est constituée de fibres de coco liées par du latex.

6. Habillage de passage de roue selon l'une des revendications 1 à 5, **caractérisé en ce que** la deuxième couche de matière (10') est constituée de granulés de liège, liés par un liant.

7. Habillage de passage de roue selon l'une des revendications 1 à 6, **caractérisé en ce que** la deuxième couche de matière (10") est constituée d'une nappe de non-tissé volumineux gonflé ayant une épaisseur de couche de 4 à 10 mm.

8. Habillage de passage de roue selon l'une des revendications 1 à 7, **caractérisé en ce que** la première couche de matière (6) est constituée d'un non-tissé aiguilleté (7) et d'une couche de support inflexible (8) .

9. Habillage de passage de roue selon l'une des revendications 1 à 8, **caractérisé en ce que** la troisième couche de matière (9') est constituée d'un non-tissé aiguilleté (7) et d'une couche de support inflexible (8) .

10. Habillage de passage de roue selon la revendication 8 ou 9, **caractérisé en ce que** la couche de support (8) est constituée de fibres de polyéthylène-téréphtalate et de fibres de polypropylène.

11. Habillage de passage de roue selon l'une des revendications 8 à 10, **caractérisé en ce que** le non-tissé aiguilleté (7) est disposé à la surface extérieure de la couche de support (8).

12. Habillage de passage de roue selon l'une des revendications 1 à 11, **caractérisé en ce que** la première couche de matière (6) présente une résistance à l'écoulement supérieure à celle de la deuxième couche de matière (10, 10', 10").

13. Habillage de passage de roue selon l'une des revendications 1 à 12, **caractérisé en ce que** la troisième couche de matière (9, 9') présente une résistance à l'écoulement supérieure à celle de la deuxième couche de matière (10, 10', 10'').

14. Habillage de passage de roue selon l'une des revendications 1 à 13, **caractérisé en ce qu'**au moins la troisième couche de matière (9, 9') est configurée hydrophobe et/ou oléophobe.

15. Habillage de passage de roue selon l'une des revendications 1 à 14, **caractérisé en que** la première couche de matière (6) présente une perméabilité à l'air inférieure à celle de la deuxième couche de matière (10, 10', 10''), et en ce que la deuxième couche de matière (10, 10',10'') présente une perméabilité à l'air inférieure à celle de la troisième couche de matière (9, 9').

16. Habillage de passage de roue selon l'une des revendications 1 à 14, **caractérisé en que** la première couche de matière (6) et la troisième couche de matière (9, 9') présente à chaque fois une perméabilité à l'air inférieure à celle de la deuxième couche de matière (10, 10', 10'').

17. Habillage de passage de roue selon l'une des revendications 1 à 16, **caractérisé en ce qu'**elle présente, sur le côté tourné vers le moteur du véhicule automobile, au moins un recouvrement latéral (3, 4).

18. Habillage de passage de roue selon la revendication 17, **caractérisé en ce que** le recouvrement latéral (3, 4) est formé d'une seule pièce avec l'habillage de passage de roue (1).

19. Habillage de passage de roue selon la revendication 17 ou 18, **caractérisé en ce que** le recouvrement latéral (3, 4) est formé de plusieurs couches de matière, une couche de matière tournée vers le moteur présentant une perméabilité à l'air supérieure à celle d'une couche de matière voisine de cette couche de matière.
